# EUROPEAN PATENT APPLICATION

(11) **EP 4 203 120 A1**
(43) Date of publication of application: **28.06.2023**
(21) Application number: 21861289.3
(22) Date of filing: 16.08.2021
(51) Int. Cl.: H01M 10/04, H01M 10/052, H01M 10/0583, H01M 50/46, H01M 50/466

(54) **BATTERY MODULE, USAGE METHOD FOR BATTERY MODULE, AND MANUFACTURING METHOD FOR BATTERY CELL**

(30) Priority: 24.08.2020 JP 2020140635
(71) Applicant: Envision AESC Japan Ltd., Zama-shi, Kanagawa 252-0012 (JP)
(72) Inventor: MATSUMURA, Naonori, Zama-shi, Kanagawa 252-0012 (JP)
(74) Representative: Hamer, Christopher K.
(86) International application number: PCT/JP2021/029867
(87) International publication number: WO 2022/044861

(57) **Abstract**

Abstract: A positive electrode (110) is a first electrode, and a negative electrode (120) is a second electrode having an area larger than that of the first electrode. A separator (130) is folded and extends through between the positive electrode (110) and the negative electrode (120) adjacent to each other. A folded portion of the separator (130) covers a portion of the negative electrode (120) on the same side in each of a plurality of battery cells (10). Specifically, the folded portion of the separator (130) covers the upper portion of the negative electrode (120) in each of the plurality of battery cells (10).

## Description

### TECHNICAL FIELD

The present invention relates to a battery module, a method of using a battery module, and a method of manufacturing a battery cell.

### BACKGROUND ART

In recent years, nonaqueous electrolyte battery cells such as a lithium-ion secondary battery cell have been developed. A battery cell includes positive electrodes, negative electrodes, and a separator. As described in Patent Document 1, for example, the separator is folded and extends through between the positive electrode and the negative electrode adjacent to each other.

### RELATED DOCUMENT

### PATENT DOCUMENT

Patent Document 1: Japanese Patent Application Publication No. 2012-190548

### SUMMARY OF THE INVENTION

### TECHNICAL PROBLEM

When a separator is folded and extends through between a positive electrode and a negative electrode adjacent to each other, a folded portion of the separator covers an end of an electrode such as the positive electrode or the negative electrode. In this case, gas generated from the electrode may remain near the end of the electrode covered by the folded portion of the separator. The remaining gas may inhibit a reaction in the battery between the positive electrode and the negative electrode. This would be result in reduction of the capacity of the battery and a risk of ignition of the battery due to Li deposition or the like. Also, contaminants such as metal pushed up by the gas would adhere to and deposit on the end of the electrode.

An object of the present invention is to allow gas generated from an electrode to easily escape from a separator. Other objects of the present invention will become apparent from the description herein.

### SOLUTION TO PROBLEM

An aspect of the present invention is a battery module including:
a housing member; and
a plurality of battery cells housed in the housing member, wherein
each of the plurality of battery cells includes a first electrode, a second electrode having an area larger than that of the first electrode, and a separator folded and extending through between the first electrode and the second electrode adjacent to each other, and
a folded portion of the separator covers a portion of the second electrode on a same side in each of the plurality of battery cells.

Another aspect of the present invention is a method of using a battery module including a housing member and a plurality of battery cells housed in the housing member, each battery cell including a first electrode, a second electrode having an area larger than that of the first electrode, and a separator folded and extending through between the first electrode and the second electrode adjacent to each other, the method including
using the battery module with a folded portion of the separator covering a portion of the second electrode on a same side in each of the plurality of battery cells.

Yet another aspect of the present invention is a method of manufacturing a battery cell including:
wrapping, by an exterior material, a first electrode, a second electrode having an area larger than that of the first electrode, and a separator folded and extending through between the first electrode and the second electrode adjacent to each other; and
removing gas inside the exterior material with a folded portion of the separator covering an upper portion of the second electrode.

### ADVANTAGEOUS EFFECTS OF INVENTION

The above aspects of the present invention can allow gas generated from an electrode to easily escape from a separator.

### BRIEF DESCRIPTION OF THE DRAWINGS

Fig. 1 is a perspective view of a battery module according to an embodiment.
Fig. 2 is a perspective view of a plurality of battery cells housed in a housing member illustrated in Fig. 1.
Fig. 3 is a plan view of the battery cell illustrated in Fig. 2.
Fig. 4 is an A-A' line cross-sectional view of Fig. 3.
Fig. 5 is a cross-sectional view of a battery cell according to a comparative example.
Fig. 6 is a diagram for illustrating an example of a method of manufacturing a battery cell according to the embodiment.
Fig. 7 is a plan view of a battery cell according to a variant.

### DESCRIPTION OF EMBODIMENTS

An embodiment of the present invention will be described below by using drawings. Note that, in every drawing, similar components are given similar signs, and description thereof is omitted as appropriate.

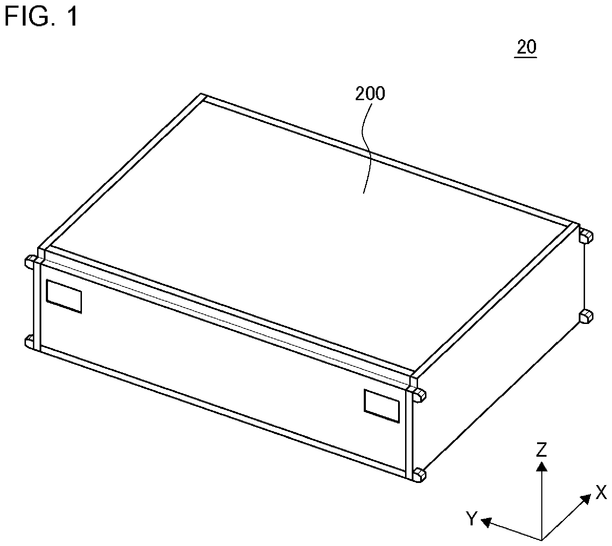

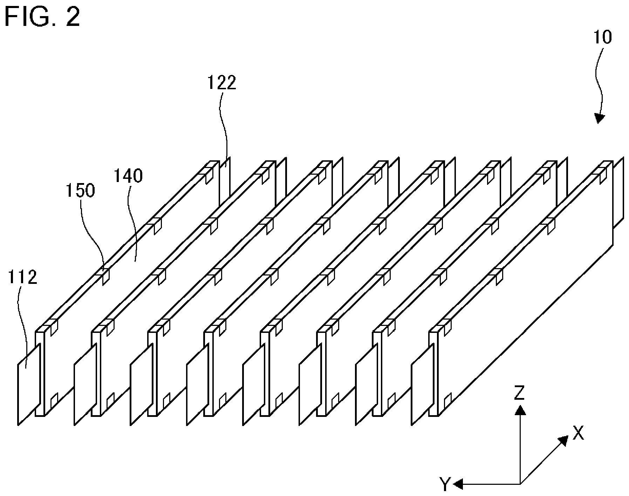

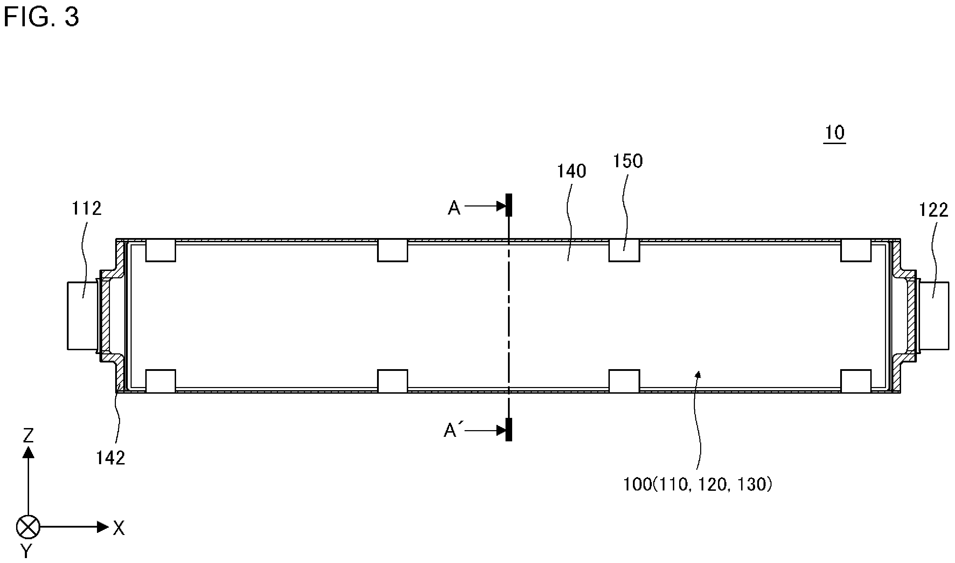

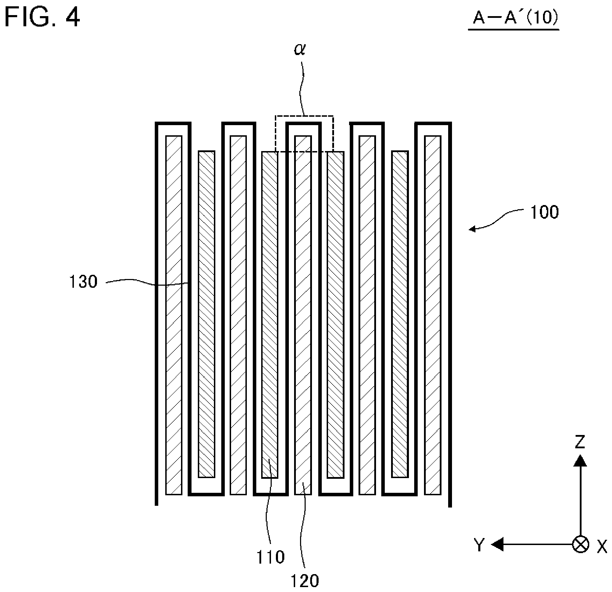

Fig. 1 is a perspective view of a battery module 20 according to the embodiment. Fig. 2 is a perspective view of a plurality of battery cells 10 housed in a housing member 200 illustrated in Fig. 1. Fig. 3 is a plan view of the battery cell 10 illustrated in Fig. 2. Fig. 4 is an A-A' line cross-sectional view of Fig. 3.

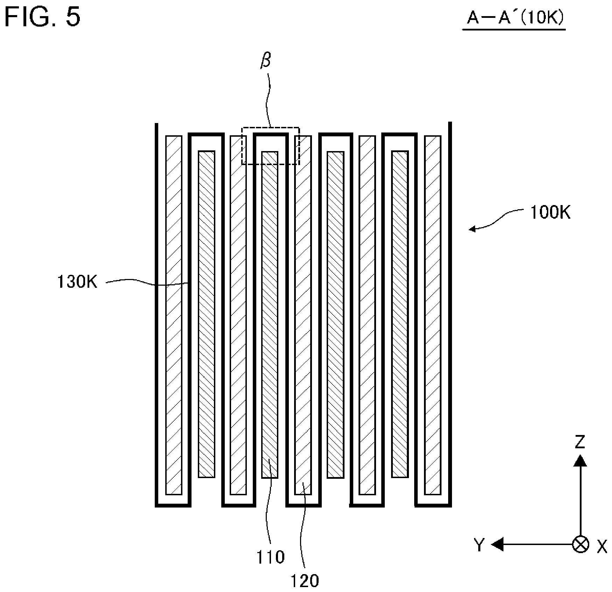

In Fig. 1 to Fig. 4, a first direction X indicates a lengthwise direction of the battery cell 10. A positive direction of the first direction X being a direction indicated by an arrow indicating the first direction X is a direction from a positive electrode lead 112 toward a negative electrode lead 122 to be described later. A negative direction of the first direction X being a direction opposite to the direction indicated by the arrow indicating the first direction X is a direction from the negative electrode lead 122 toward the positive electrode lead 112. A second direction Y intersects with the first direction X, or specifically is orthogonal to the first direction X, and indicates a thickness direction of the battery cell 10. A third direction Z intersects with both the first direction X and the second direction Y, or specifically is orthogonal to both the first direction X and the second direction Y, and indicates a width direction of the battery cell 10 and a height direction of the battery module 20. A positive direction of the third direction Z being a direction indicated by an arrow indicating the third direction Z indicates a vertical upward direction. A negative direction of the third direction Z being a direction opposite to the direction indicated by the arrow indicating the third direction Z indicates a vertical downward direction. An open circle marked with X indicating the second direction Y in Fig. 3 indicates that a direction from the front toward the back of the page is a positive direction of the second direction Y, and a direction from the back toward the front of the page is a positive direction of the third direction Z. An open circle marked with X indicating the first direction X in Fig. 4 indicates that the direction from the front toward the back of the page is the positive direction of the first direction X, and the direction from the back toward the front of the page is the negative direction of the first direction X. The same applies to Fig. 5 to Fig. 7 to be described later.

The battery module 20 will be described by using Fig. 1 and Fig. 2.

The battery module 20 includes a plurality of battery cells 10 and a housing member 200. The plurality of battery cells 10 are housed in the housing member 200. The plurality of battery cells 10 are arranged in one direction, or specifically in the second direction Y. The housing member 200 is an enclosure made of metal or resin, for example. As illustrated in Fig. 2, each battery cell 10 includes a positive electrode lead 112, a negative electrode lead 122, an exterior material 140, and a plurality of fixing members 150. The positive electrode lead 112 and the negative electrode lead 122 are provided on both sides of the battery cell 10 in the first direction X. Note that both of the positive electrode lead 112 and the negative electrode lead 122 may be provided at an end of the battery cell 10 on the positive direction side or the negative direction side of the first direction X. The exterior material 140 wraps a stacked body 100 including positive electrodes 110, negative electrodes 120, and a separator 130 illustrated in Fig. 4 to be described later along with an electrolytic solution. Fixing members 150 such as insulating tapes, for example, are provided on both sides of the exterior material 140 extending in the first direction X.

The battery cell 10 will be described by using Fig. 3 and Fig. 4. The battery cell 10 according to the present embodiment is a lithium-ion secondary battery.

The battery cell 10 includes the stacked body 100. The stacked body 100 includes a plurality of positive electrodes 110, a plurality of negative electrodes 120, and the separator 130. According to the present embodiment, the positive electrode 110 is a first electrode, and the negative electrode 120 is a second electrode having an area larger than that of the first electrode. Each of the positive electrodes 110 and the negative electrodes 120 has a thickness in the second direction Y. Note that an area of the positive electrode 110 or the negative electrode 120 means an area of the positive electrode 110 or the negative electrode 120 as viewed from the positive direction or the negative direction of the second direction Y.

As illustrated in Fig. 4, the plurality of positive electrodes 110 and the plurality of negative electrodes 120 are alternately arranged along the above one direction, or specifically the second direction Y. The separator 130 is folded and extends through between a positive electrode 110 and a negative electrode 120 adjacent to each other. The folded portions of the separator 130 cover portions of the negative electrodes 120 on the same side. Specifically, the folded portions of the separator 130 covers the upper portions of the negative electrode 120.

The exterior material 140 includes a portion covering the stacked body 100 from the positive direction side of the second direction Y and a portion covering the stacked body 100 from the negative direction side of the second direction Y. The portions of the exterior material 140 are bonded together along two sides of the stacked body 100 on the positive direction side and the negative direction side of the first direction X and two sides on the positive direction side and the negative direction side of the third direction Z, thus forming a sealing portion 142. A plurality of fixing members 150 are provided along one side of the stacked body 100 on the positive direction side of the third direction Z and one side of the stacked body 100 on the negative direction side of the third direction Z.

Fig. 5 is a cross-sectional view of a battery cell 10K according to a comparative example. The battery cell 10K according to the comparative example is similar to the battery cell 10 according to the embodiment except for the following.

The battery cell 10K includes a stacked body 100K. The stacked body 100K includes a plurality of positive electrodes 110, a plurality of negative electrodes 120, and a separator 130K. The folded portions of the separator 130K cover the upper portions of the positive electrode 110 in the battery cell 10K.

Consider the case that gas is generated from the positive electrode 110 and the negative electrode 120 in the embodiment illustrated in Fig. 4. The gas is generated due to use of the battery cell 10, such as charging, for example. The gas generated from the positive electrode 110 rises through an electrolytic solution by buoyancy. The upper portion of the positive electrode 110 is not covered by the separator 130. The gas can therefore escape toward above the positive electrode 110 without the necessity of permeating through the separator 130. In order to allow the gas generated from the negative electrode 120 to escape toward above the negative electrode 120, on the other hand, the gas needs to permeate through the folded portion of the separator 130 covering the upper portion of the negative electrode 120, such as a region α enclosed by broken lines. In the embodiment, both sides of the folded portion of the separator 130 in the second direction Y covering the upper portion of the negative electrode 120 are not covered by the positive electrodes 110. Accordingly, compared with a case that both sides of the folded portion of the separator 130 in the second direction Y covering the upper portion of the negative electrode 120 are covered by the positive electrodes 110, the gas generated from the negative electrode 120 easily permeates through the folded portion of the separator 130 covering the upper portion of the negative electrode 120, and easily escapes toward above the folded portion of the separator 130.

Consider the case that the gas is generated from the positive electrode 110 and the negative electrode 120 in the comparative example illustrated in Fig. 5. The gas generated from the negative electrode 120 rises through an electrolytic solution by buoyancy. The upper portion of the negative electrode 120 is not covered by the separator 130K. The gas can therefore escape toward above the negative electrode 120 without the necessity of permeating through the separator 130K. In order to allow the gas generated from the positive electrode 110 to escape toward above the positive electrode 110, on the other hand, the gas needs to permeate through the folded portion of the separator 130K covering the upper portion of the positive electrode 110, such as a region β enclosed by broken lines. In the comparative example, however, both sides of the folded portion of the separator 130K in the second direction Y covering the upper portion of the positive electrode 110 are covered by the negative electrodes 120. Accordingly, compared with a case that both sides of the folded portion of the separator 130K in the second direction Y covering the upper portion of the positive electrode 110 are not covered by the negative electrodes 120, the gas generated from the positive electrode 110 less easily permeates through the folded portion of the separator 130K covering the upper portion of the positive electrode 110, and less easily escapes toward above the folded portion of the separator 130K.

In the comparative example illustrated in Fig. 5, as described above, the gas generated from the positive electrode 110 less easily escapes toward above the folded portion of the separator 130K covering the upper portion of the positive electrode 110. In the comparative example, accordingly, the gas generated from the positive electrode 110 may remain near the upper portion of the positive electrode 110 and inhibit a reaction in the battery cell 10K between the positive electrode 110 and the negative electrode 120. This would result in reduction of the capacity of the battery cell 10K, and a risk of ignition of the battery cell 10K due to Li deposition or the like. In the comparative example, contaminants such as metal would be pushed up by the gas generated from the positive electrode 110 and would adhere to and deposit on the surface of the positive electrode 110. In the embodiment illustrated in Fig. 4, on the other hand, as described above, the gas generated from the negative electrode 120 easily escapes toward above the folded portion of the separator 130 covering the upper portion of the negative electrode 120. Accordingly, the embodiment can suppress the gas generated from the negative electrode 120 from inhibiting a reaction in the battery cell 10 between the positive electrode 110 and the negative electrode 120, and the contaminants such as metal from depositing on the surface of the upper portion of the negative electrode 120, compared with the comparative example.

In the embodiment, as illustrated in Fig. 4, the folded portion of the separator 130 covers a portion on the same side of the negative electrode 120 in each of the plurality of battery cells 10 illustrated in Fig. 2. Specifically, the folded portion of the separator 130 covers the upper portion of the negative electrodes 120 in each of the plurality of battery cells 10. Accordingly, the gas generated from the negative electrode 120 easily escapes from the separator 130 in each of the plurality of battery cells 10.

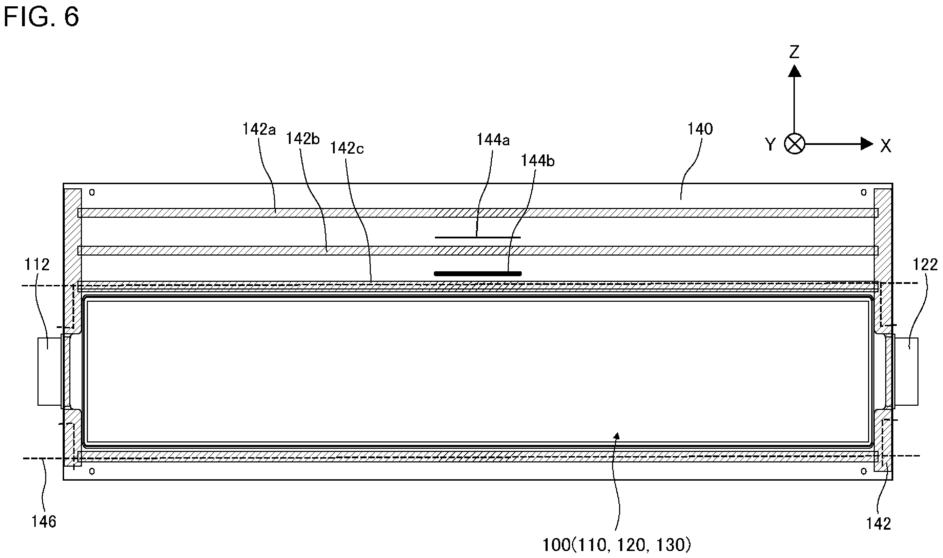

Fig. 6 is a diagram for illustrating an example of a method of manufacturing the battery cell 10 according to the embodiment.

First, the positive electrodes 110, the negative electrodes 120, and the separator 130 folded and extending through between the positive electrode 110 and the negative electrode 120 adjacent to each other are wrapped by the exterior material 140.

Specifically, the exterior material 140 includes a portion covering the stacked body 100 from the positive direction side of the second direction Y and a portion covering the stacked body 100 from the negative direction side of the second direction Y. The portions of the exterior material 140 are bonded together along one side of the stacked body 100 on the negative direction side of the third direction Z, one side of the stacked body 100 on the negative direction side of the first direction X and a region extending from the one side toward the positive direction side of the third direction Z, and one side of the stacked body 100 on the positive direction side of the first direction X and a region extending from the one side toward the positive direction side of the third direction Z, thus forming the sealing portion 142. Next, an electrolytic solution is injected into the exterior material 140. Next, a first sealing portion 142a is formed in a portion of the exterior material 140 apart from one side of the stacked body 100 on the positive direction side of the third direction Z by bonding such as welding. Thus, the stacked body 100 is sealed by the exterior material 140.

Next, the gas inside the exterior material 140 is removed with the folded portion of the separator 130 covering the upper portion of the negative electrode 120.

Specifically, first, the gas generated inside the exterior material 140 by performing initial charging is removed from a first hole 144a formed closer to the stacked body 100 than the first sealing portion 142a in the third direction Z. The first hole 144a is formed after the first sealing portion 142a is formed. Specifically, the first hole 144a is formed at timing when it is desired to remove the gas, such as after the gas is generated by the initial charging, for example. The timing when the first hole 144a is formed is not however limited to this example. Next, a second sealing portion 142b is formed closer to the stacked body 100 than the first hole 144a in the third direction Z in the exterior material 140 by bonding such as welding. Next, the gas generated inside the exterior material 140 by performing aging is removed from a second hole 144b formed closer to the stacked body 100 than the second sealing portion 142b in the third direction Z. The second hole 144b is formed after the second sealing portion 142b is formed. Specifically, the second hole 144b is formed at timing when it is desired to remove the gas, such as after the gas is generated by aging, for example. The timing when the second hole 144b is formed is not however limited to this example. Next, a third sealing portion 142c is formed along one side of the stacked body 100 on the positive direction side of the third direction Z by bonding such as welding. Next, the exterior material 140 is cut along a perforated line 146. Thus, the battery cell 10 is manufactured.

When the gas inside the exterior material 140 is removed from the first hole 144a or the second hole 144b, the folded portion of the separator 130 can cover the upper portion of the negative electrode 120, as described by using Fig. 4. This can allow the gas generated from the negative electrode 120 by initial charging or aging to easily escape from the separator 130.

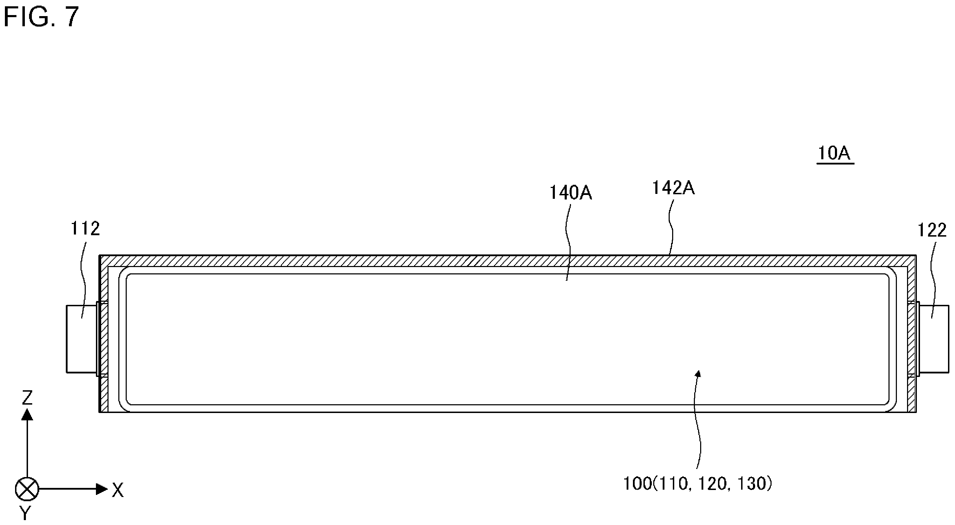

Fig. 7 is a plan view of a battery cell 10A according to a variant. The battery cell 10A according to the variant is similar to the battery cell 10 according to the embodiment except for the following.

An exterior material 140A is folded back on the negative direction side of the stacked body 100 in the third direction Z. The portions of the exterior material 140A covering the stacked body 100 from both the positive direction and the negative direction of the second direction Y are bonded together by welding or the like, thus forming a sealing portion 142A along one side of the stacked body 100 on the positive direction side of the third direction Z and two sides of the stacked body 100 on the positive direction side and the negative direction side of the first direction X. Also in this variant, similarly to the embodiment, the gas generated from the negative electrode 120 easily escapes from the separator 130.

Also in a method of manufacturing the battery cell 10A according to the variant, similarly to the example described by using Fig. 6, the gas inside the exterior material 140 can be removed with the folded portion of the separator 130 covering the upper portion of the negative electrode 120. In this case, roll pressing may be performed on the battery cell 10A after removal of the gas. The gas can be expelled to an extra space around the stacked body 100 by roll pressing. The gas may be further removed through a hole formed on the exterior material 140A.

While the embodiment and the variant of the present invention have been described above with reference to the drawings, the embodiment and the variant are exemplifications of the present invention, and various configurations other than those described above may be employed.

In the embodiment, for example, the area of the negative electrode 120 is larger than the area of the positive electrode 110. The area of the positive electrode 110 may be however larger than the area of the negative electrode 120. In this case, the gas generated from the positive electrode 110 can be allowed to easily escape from the separator 130.

The battery module 20 according to the embodiment may be used with the folded portion of the separator 130 covering a portion of the negative electrode 120 on the same side, such as the upper portion of the negative electrode 120 for example, in each of a plurality of battery cells 10. In this case, the gas generated due to use of the battery cell 10 can be allowed to easily escape from the separator 130.

This application claims priority based on Japanese Patent Application No. 2020-140635 filed on August 24, 2020, the disclosure of which is hereby incorporated by reference thereto in its entirety.

### REFERENCE SIGNS LIST

- 10: Battery cell
- 10A: Battery cell
- 10K: Battery cell
- 20: Battery module
- 100: STACKED BODY
- 100K: STACKED BODY
- 110: Positive electrode
- 112: Positive electrode lead
- 120: Negative electrode
- 122: Negative electrode lead
- 130: Separator
- 130K: Separator
- 140: Exterior material
- 140A: Exterior material
- 142: Sealing portion
- 142A: Sealing portion
- 142a: First sealing portion
- 142b: Second sealing portion
- 142c: Third sealing portion
- 144a: First hole
- 144b: Second hole
- 146: Perforated line
- 150: Fixing member
- 200: Housing member
- X: First direction
- Y: Second direction
- Z: Third direction

## Claims

1. A battery module comprising:
a housing member; and
a plurality of battery cells housed in the housing member, wherein
each of the plurality of battery cells includes a first electrode, a second electrode having an area larger than that of the first electrode, and a separator folded and extending through between the first electrode and the second electrode adjacent to each other, and
a folded portion of the separator covers a portion of the second electrode on a same side in each of the plurality of battery cells.

2. The battery module according to claim 1, wherein
the folded portion of the separator covers an upper portion of the second electrode in each of the plurality of battery cells.

3. The battery module according to claim 1 or 2, wherein
the first electrode is a positive electrode, and the second electrode is a negative electrode.

4. A method of using a battery module including a housing member and a plurality of battery cells housed in the housing member, each battery cell including a first electrode, a second electrode having an area larger than that of the first electrode, and a separator folded and extending through between the first electrode and the second electrode adjacent to each other, the method comprising
using the battery module with a folded portion of the separator covering a portion of the second electrode on a same side in each of the plurality of battery cells.

5. A method of manufacturing a battery cell comprising:
wrapping, by an exterior material, a first electrode, a second electrode having an area larger than that of the first electrode, and a separator folded and extending through between the first electrode and the second electrode adjacent to each other; and
removing gas inside the exterior material with a folded portion of the separator covering an upper portion of the second electrode.
